# EUROPEAN PATENT APPLICATION

(11) **EP 4 636 637 A1**
(43) Date of publication of application: **22.10.2025**
(21) Application number: 23921360.6
(22) Date of filing: 19.12.2023
(51) Int. Cl.: G06F 30/15, B62D 25/00, G06F 30/20

(54) **AUTOMOBILE BODY DESIGN METHOD, DEVICE, AND PROGRAM, AND AUTOMOBILE BODY MANUFACTURING METHOD**

(30) Priority: 09.02.2023 JP 2023018053
(71) Applicant: JFE Steel Corporation, Tokyo 100-0011 (JP)
(72) Inventor: AGEBA, Ryo, Tokyo 100-0011 (JP)
(74) Representative: Grünecker Patent- und Rechtsanwälte PartG mbB
(86) International application number: PCT/JP2023/045499
(87) International publication number: WO 2024/166541

(57) **Abstract**

An automotive body design method according to the present invention has processing executed by a computer in order to design an automotive body 100 in which an automotive part is changed to a structure for enhancing stiffness and vibration-damping properties of a vibration noise reduction target portion in the automotive body are improved. The processing includes: a sensitivity analysis step S1 of performing sensitivity analysis for obtaining sensitivity to vibration characteristics used for evaluation of the vibration-damping properties of the vibration noise reduction target portion for an automotive part changeable to a structure for enhancing stiffness among automotive parts; and a high-stiffness structure determining step S3 of determining a structure for enhancing stiffness of the automotive part based on the sensitivity obtained for the automotive part by the sensitivity analysis.

## Description

### Field

The present invention relates to an automotive body design method, apparatus, and program for designing an automotive body in which vibration-damping properties of a vibration noise reduction target portion in the automotive body are improved, and a method for manufacturing the automotive body.

### Background

In recent years, development of an efficient design method for an automotive body excellent in vibration-damping properties has been required more than ever. One of the major factors is the spread and expansion of a battery powered vehicle (battery electric vehicle). This is because the battery powered vehicle does not generate vibration and noise due to an internal combustion engine, and thus sensitivity of an occupant to vibration and noise due to other vibration sources is increased. In addition, the battery powered vehicle needs to be equipped with a large-capacity battery, and there is a case where a body frame structure is greatly different in combination with a protective structure thereof. As a result, since a vibration transfer path of the battery powered vehicle is different from that of a conventional gasoline vehicle, a conventional empirical rule related to a vibration damping structure for reducing vibration and noise does not hold in automotive body design.

Therefore, optimization analysis using a computer has been proposed as a means for obtaining a design guideline of a vibration damping structure for reducing vibration and noise without following the conventional empirical rule. For example, Patent Literature 1 discloses a method of specifying a vibration transmission frame part in a vibration transfer path from a vibration source of an automobile to a panel part which is a vibration noise reduction target, and determining an optimum sectioning region and a sheet thickness for sectioning the specified vibration transmission frame part for each sheet thickness. Further, Patent Literature 2 discloses a method for obtaining an optimum distribution of beads to be applied to a panel part of an automobile for reducing vibration noise of the panel part.

Further, in order to improve vibration characteristics of an automotive body, "sensitivity analysis" for extracting a portion having high sensitivity to vibration is important. The sensitivity analysis is an analysis method for estimating a degree of contribution of a shape, a dimension, a material property, or the like of a portion constituting an automotive body (for example, an automotive part or the like) to required performance of the automotive body (automotive body stiffness or the like). It is obvious that vibration characteristics of a structural body formed of a metal sheet such as an automotive body depend on a sheet thickness configuration, and a sensitivity analysis method utilizing sheet thickness optimization has been disclosed.

For example, Patent Literature 3 discloses a method of analyzing sensitivity of a sheet thickness of an automotive part of an automobile to vibration performance of the automotive part (sensitivity analysis to which sheet thickness optimization is applied). The sensitivity analysis to which the sheet thickness optimization is applied is an analysis method in which a sheet thickness of a portion constituting a structural body is set as a design variable and an optimum sheet thickness that satisfies required performance of the structural body is obtained for each portion under a constraint regarding a weight of the structural body or the like. In the sensitivity analysis to which the sheet thickness optimization is applied, a portion where the sheet thickness is thicker than that of an original automotive part is specified as a portion having high sensitivity to the required performance of the structural body, and a portion where the sheet thickness is thinner is specified as a portion having low sensitivity to the required performance.

In addition, Patent Literature 4 also discloses a sensitivity analysis method for obtaining sensitivity of a shape or the like of an automotive part to automotive body performance of an automotive body by applying a densimetry (density method) of topology optimization. In the sensitivity analysis method, element densities of shell elements calculated by the topology optimization using the densimetry (virtual density representing a filling state of a material in each shell element) are set as sensitivity. In the sensitivity analysis method, Young's modulus, specific gravity, and the like are set as material properties of the shell element, and an element density of each shell element in which a structural body (automotive body) satisfies a required characteristic (objective condition) under a constraint condition is obtained as sensitivity. As a result, a portion having a high element density can be specified as a portion having high sensitivity to required performance to be satisfied by the structural body, and a portion having a low element density can be specified as a portion having low sensitivity to the required performance.

### Citation List

### Patent Literature

Patent Literature 1: Japanese Patent No. 6769536
Patent Literature 2: Japanese Patent No. 6798595
Patent Literature 3: JP 2022-121904 A
Patent Literature 4: Japanese Patent No. 6617812 Summary

### Technical Problem

According to the method disclosed in Patent Literature 1, vibration noise of the panel part caused by vibration transmitted from the vibration source in the automobile can be efficiently and reliably reduced. However, since the method is based on the premise that the sheet thickness of the automotive body frame part is reconfigured, it may be difficult to improve vibration-damping properties of the panel part which is a vibration noise reduction target without deteriorating other automotive body performance such as automotive body stiffness and crashworthiness.

Further, according to the method disclosed in Patent Literature 2, it is possible to reduce noise caused by vibration of the panel part of the automobile by obtaining the optimum distribution of the beads applied to the panel part. However, since it is necessary to apply the bead to the panel part itself that is a source of vibration noise, for example, in a case of a panel part used on the outside of an automotive body such as a roof panel, appearance is impaired due to an uneven shape of the bead, and thus the application may be difficult.

On the other hand, when a sheet thickness configuration that improves vibration characteristics without increasing a weight of the automotive body is obtained by sensitivity analysis to which the sheet thickness optimization disclosed in Patent Literature 3 is applied, not only a portion where the sheet thickness is thicker than the original automotive part but also a portion where the sheet thickness is thinner are generated. Since a portion having a large sheet thickness reduction rate based on an original sheet thickness is a portion having low sensitivity to the vibration characteristics, it is considered that an influence on the vibration characteristics due to the sheet thickness reduction is sufficiently small. However, in a portion where the sheet thickness is reduced, automotive body performance other than the vibration characteristics such as automotive body stiffness and crashworthiness may deteriorate.

In addition, in a case where the sensitivity analysis method to which topology optimization disclosed in Patent Literature 4 is applied is applied to sensitivity analysis of an automotive part with respect to vibration performance, a portion where a three-dimensional element remains (a portion having a high element density) in the automotive part is identified as a portion having high sensitivity to vibration characteristics. However, it is unclear which one of stiffness caused by a structure (shape) of the remaining three-dimensional element and a weight of the remaining three-dimensional element contributes to the vibration characteristics. Therefore, even if the structure is changed to increase the stiffness without increasing the weight with respect to the portion, there is a problem that vibration-damping properties of a vibration noise reduction target portion are not necessarily improved.

Further, in these methods, a target to be subjected to a countermeasure for reducing the vibration noise of the panel part is limited to the frame part (Patent Literature 1) or the panel part itself (Patent Literature 2). However, there is a case where the vibration of the panel part cannot be sufficiently reduced only by taking measures for the frame part or the panel part itself. Therefore, there has been a demand for a method for designing and manufacturing an automotive body in which both a frame part and a panel part constituting the automotive body are targeted and vibration-damping properties of the panel part as a vibration noise reduction target portion are improved without deteriorating other automotive body performance such as automotive body stiffness and crashworthiness.

The present invention has been made to solve the above problems, and an object of the present invention is to provide an automotive body design method, apparatus, and program for designing an automotive body in which vibration-damping properties of a vibration noise reduction target portion are improved without deteriorating automotive body performance, and a method for manufacturing the automotive body.

### Solution to Problem

An automotive body design method according to the present invention is executed by a computer for designing an automotive body in which an automotive part constituting the automotive body is changed to a structure for enhancing stiffness and vibration-damping properties of a vibration noise reduction target portion in the automotive body are improved, and includes: a sensitivity analysis step of performing sensitivity analysis for obtaining sensitivity to vibration characteristics used for evaluation of the vibration-damping properties of the vibration noise reduction target portion for an automotive part changeable to a structure for enhancing stiffness; and a high-stiffness structure determining step of determining a structure for enhancing stiffness of the automotive part based on the sensitivity obtained for the automotive part by the sensitivity analysis, wherein the sensitivity analysis step includes: a sensitivity analysis automotive body model generation step of arranging a sensitivity determining element in a two-dimensional space along a surface of the automotive part and connecting the arranged sensitivity determining element to the automotive part to generate a sensitivity analysis automotive body model, a sensitivity determining element material property setting step of setting, as material properties of the sensitivity determining element in the sensitivity analysis automotive body model, an elastic coefficient corresponding to a metal material used in the automotive part and a density of a value small enough not to affect vibration characteristics of the vibration noise reduction target portion in the sensitivity analysis automotive body model, a sensitivity analysis condition setting step of setting, as sensitivity analysis conditions in the sensitivity analysis, a vibration input condition related to vibration to be given to the sensitivity analysis automotive body model, an objective function related to the vibration characteristics of the vibration noise reduction target portion in the sensitivity analysis automotive body model, and a constraint condition related to the sensitivity determining element in the sensitivity analysis automotive body model, and a sensitivity analysis step of performing the sensitivity analysis under the set sensitivity analysis conditions and obtaining sensitivity of the sensitivity determining element to the vibration characteristics of the vibration noise reduction target portion.

In the sensitivity analysis condition setting step, the vibration input condition may be that a predetermined vibration is input to one or two or more portions of the sensitivity analysis automotive body model, the objective function may be that minimization of a frequency response value of any one of acceleration, inertance, and equivalent emission power in a predetermined frequency band of the vibration noise reduction target portion, or minimization of a function using these as variables, and the constraint condition may be that a volume ratio of the sensitivity determining element is a predetermined value or less, and in the sensitivity analysis step, topology optimization may be performed on the sensitivity determining element arranged in the automotive part, and the sensitivity determining element in the automotive part remaining by analysis processing of the topology optimization may be obtained as a portion having high sensitivity to the vibration characteristics of the vibration noise reduction target portion in the automotive part.

In the high-stiffness structure determining step, a structure in which an uneven shape having a predetermined dimension is imparted to a portion corresponding to the sensitivity determining element having high sensitivity obtained for the automotive part may be determined as a structure in which stiffness of the automotive part is enhanced.

The high-stiffness structure determining step may include: a high-sensitivity automotive part selection step of selecting, as a high-sensitivity automotive part, an automotive part having a large ratio of the sensitivity determining element having high sensitivity obtained by the sensitivity analysis among the automotive parts, and a topography optimization analysis step of performing topography optimization of obtaining an optimum uneven shape to be imparted to a surface of the selected high-sensitivity automotive part, and determining a structure for enhancing stiffness of the high-sensitivity automotive part based on the optimum uneven shape obtained by the topography optimization.

The high-stiffness structure determining step may include: a design space setting step of selecting an automotive part having a large ratio of the sensitivity determining element having high sensitivity obtained by the sensitivity analysis among the automotive parts, and setting a design space along a surface of the selected automotive part, and a topology optimization analysis step of performing topology optimization of obtaining an optimum shape of the automotive part in which the design space is set, and determining a structure for enhancing stiffness of the automotive part based on the optimum shape of the automotive part obtained by the topology optimization.

An automotive body design apparatus according to the present invention designs an automotive body in which an automotive part constituting the automotive body is changed to a structure for enhancing stiffness and vibration-damping properties of a vibration noise reduction target portion in the automotive body are improved, and includes: a sensitivity analysis unit configured to perform sensitivity analysis for obtaining sensitivity to vibration characteristics used for evaluation of the vibration-damping properties of the vibration noise reduction target portion for an automotive part changeable to a structure for enhancing stiffness; and a high-stiffness structure determining unit configured to determine a structure for enhancing stiffness of the automotive part based on the sensitivity obtained for the automotive part by the sensitivity analysis, wherein the sensitivity analysis unit includes: a sensitivity analysis automotive body model generation section configured to arrange a sensitivity determining element in a two-dimensional space along a surface of the automotive part and connect the arranged sensitivity determining element to the automotive part to generate a sensitivity analysis automotive body model, a sensitivity determining element material property setting section configured to set, as material properties of the sensitivity determining element in the sensitivity analysis automotive body model, an elastic coefficient corresponding to a metal material used in the automotive part and a density of a value small enough not to affect vibration characteristics of the vibration noise reduction target portion in the sensitivity analysis automotive body model, a sensitivity analysis condition setting section configured to set, as sensitivity analysis conditions in the sensitivity analysis, a vibration input condition related to vibration to be given to the sensitivity analysis automotive body model, an objective function related to the vibration characteristics of the vibration noise reduction target portion in the sensitivity analysis automotive body model, and a constraint condition related to the sensitivity determining element in the sensitivity analysis automotive body model, and a sensitivity analysis section configured to perform the sensitivity analysis under the set sensitivity analysis conditions and obtain sensitivity of the sensitivity determining element to the vibration characteristics of the vibration noise reduction target portion.

An automotive body design program according to the present invention designs an automotive body in which an automotive part constituting the automotive body is changed to a structure for enhancing stiffness and vibration-damping properties of a vibration noise reduction target portion in the automotive body are improved, and causes a computer to function as: a sensitivity analysis unit configured to perform sensitivity analysis for obtaining sensitivity to vibration characteristics used for evaluation of the vibration-damping properties of the vibration noise reduction target portion for an automotive part changeable to a structure for enhancing stiffness; and a high-stiffness structure determining unit configured to determine a structure for enhancing stiffness of the automotive part based on the sensitivity obtained for the automotive part by the sensitivity analysis, wherein the sensitivity analysis unit includes: a sensitivity analysis automotive body model generation section configured to arrange a sensitivity determining element in a two-dimensional space along a surface of the automotive part and connect the arranged sensitivity determining element to the automotive part to generate a sensitivity analysis automotive body model, a sensitivity determining element material property setting section configured to set, as material properties of the sensitivity determining element in the sensitivity analysis automotive body model, an elastic coefficient corresponding to a metal material used in the automotive part and a density of a value small enough not to affect vibration characteristics of the vibration noise reduction target portion in the sensitivity analysis automotive body model, a sensitivity analysis condition setting section configured to set, as sensitivity analysis conditions in the sensitivity analysis, a vibration input condition related to vibration to be given to the sensitivity analysis automotive body model, an objective function related to the vibration characteristics of the vibration noise reduction target portion in the sensitivity analysis automotive body model, and a constraint condition related to the sensitivity determining element in the sensitivity analysis automotive body model, and a sensitivity analysis section configured to perform the sensitivity analysis under the set sensitivity analysis conditions and obtain sensitivity of the sensitivity determining element to the vibration characteristics of the vibration noise reduction target portion.

A method for manufacturing an automotive body according to the present invention manufactures an automotive body in which an automotive part constituting the automotive body is changed to a structure for enhancing stiffness and vibration-damping properties of a vibration noise reduction target portion in the automotive body are improved, and includes: determining, by using the automotive body design method according to the present invention, a structure for enhancing stiffness of the automotive part based on sensitivity to vibration characteristics used for evaluation of the vibration-damping properties of the vibration noise reduction target portion; and manufacturing the automotive part based on the determined structure for enhancing stiffness.

### Advantageous Effects of Invention

In the present invention, sensitivity analysis is performed to obtain sensitivity that is a degree of contribution of local stiffness to vibration characteristics of a vibration noise reduction target portion without considering an influence of weight for an automotive part that can be changed to a structure for enhancing stiffness among a frame part and a panel part constituting an automotive body. Then, a structure for enhancing stiffness of the automotive part is determined based on the sensitivity obtained by the sensitivity analysis. As a result, it is possible to design and further manufacture an automotive body in which the vibration-damping properties of the vibration noise reduction target portion are improved without deteriorating other automotive body performance such as automotive body stiffness and crashworthiness and without increasing the weight.

### Brief Description of Drawings

[FIG. 1] FIG. 1 is a block diagram illustrating a configuration of an automotive body design apparatus according to a first embodiment.
[FIG. 2] FIG. 2 is a diagram illustrating an example of an automotive body to be analyzed in the first embodiment and a portion used for evaluation of vibration characteristics of the automotive body and a portion to which vibration is input.
[FIG. 3] FIG. 3 is a diagram illustrating a specific configuration of a high-stiffness structure determining unit that determines a structure for enhancing stiffness by performing topography optimization or topology optimization on a high-sensitivity automotive part having high sensitivity to vibration characteristics of a vibration noise reduction target portion in the automotive body design apparatus according to the first embodiment ((a) configuration for performing topography optimization, (b) configuration for performing topology optimization).
[FIG. 4] FIG. 4 is a flowchart illustrating a flow of processing in an automotive body design method according to the first embodiment.
[FIG. 5] FIG. 5 is a diagram illustrating a specific configuration of a high-stiffness structure determining step of determining a structure for enhancing stiffness by performing topography optimization or topology optimization in the automotive body design method according to the first embodiment ((a) configuration for performing topography optimization, (b) configuration for performing topology optimization).
[FIG. 6] FIG. 6 is a diagram illustrating an example of a sensitivity analysis automotive body model generated by arranging a sensitivity determining element in a two-dimensional space along a surface of an automotive part changeable to a structure for enhancing stiffness in the first embodiment.
[FIG. 7] FIG. 7 is a diagram illustrating a frequency response of equivalent emission power of a roof panel obtained as an example of vibration characteristics used for evaluation of vibration-damping properties of a vibration noise reduction target portion in the first embodiment.
[FIG. 8] FIG. 8 is a diagram illustrating (a) a sensitivity determining element remaining by sensitivity analysis to which topology optimization is applied and (b) a high-sensitivity automotive part having a large ratio of highly sensitive sensitivity determining element in the first embodiment.
[FIG. 9] FIG. 9 is a contour diagram illustrating a result of performing topography optimization on a high-sensitivity automotive part and obtaining an optimum uneven shape to be imparted to a surface of the high-sensitivity automotive part in the first embodiment.
[FIG. 10] FIG. 10 is a graph illustrating a result of obtaining a frequency response of equivalent emission power of a roof panel for each of an automotive body before an automotive part is changed to a structure for enhancing stiffness and an automotive body in which an optimum uneven shape obtained by topography optimization is imparted to a high-sensitivity automotive part having high sensitivity to vibration characteristics of the roof panel and stiffness is changed to a structure in the first embodiment. Description of Embodiments

Prior to describing a first embodiment and a second embodiment of the present invention, an automotive body targeted in the present invention and circumstances leading to the present invention will be described. In coordinate axes illustrated in the drawings of the present application, an X-axis direction, a Y-axis direction, and a Z-axis direction indicate a front-rear direction of an automotive body, a width direction of the automotive body, and a vertical direction of the automotive body, respectively.

### <Automotive Body>

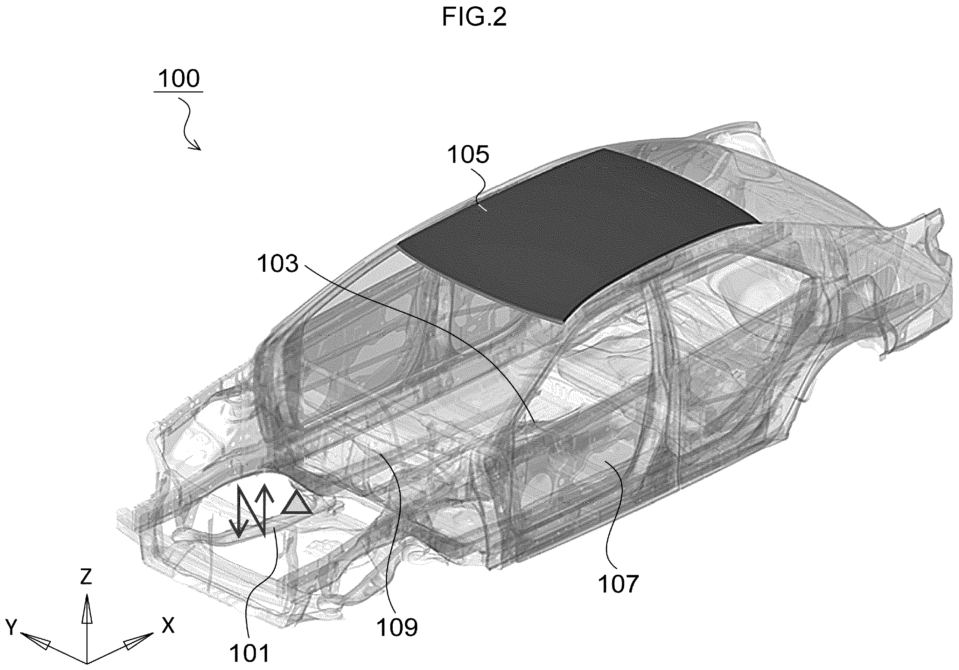

As illustrated in FIG. 2 as an example, an automotive body 100 includes automotive parts such as an automotive body frame part and a panel part. The automotive body frame part is a part constituting an automotive body frame of an automobile, and examples thereof include a subframe 101 and a tunnel 103. The panel part is an outer panel or an inner panel that is a part having a thin sheet structure, and examples thereof include a roof panel 105, a floor panel 107, and a dash panel 109.

In the automotive body 100, it may be required to reduce vibration noise of the panel part such as the roof panel 105.

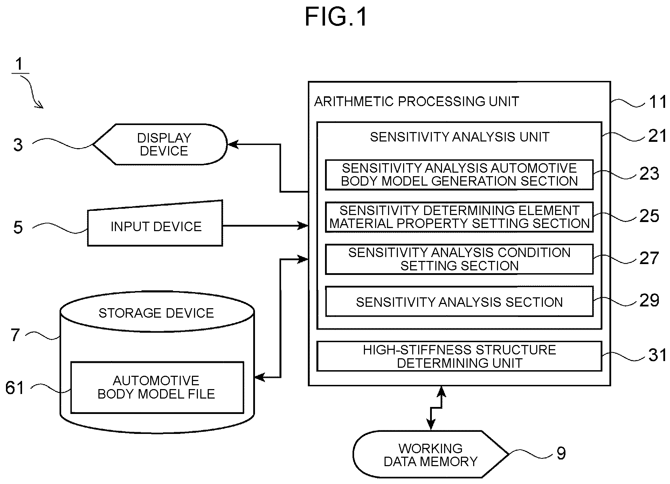

As will be described later, the present invention performs sensitivity analysis of obtaining a portion having high contribution (sensitivity) to vibration characteristics of a panel part that is a vibration noise reduction target portion for each automotive part of the automotive body 100. Therefore, automotive parts constituting the automotive body 100 are modeled by shell elements and/or solid elements in order to perform sensitivity analysis. Element information, a material property, and the like of each automotive part constituting the automotive body 100 are stored in an automotive body model file 61 (FIG. 1) to be described later.

### <Circumstances Leading to Invention>

In the sensitivity analysis disclosed in Patent Literatures 3 and 4, as described above, the optimization method is applied to obtain the sheet thickness configuration (Patent Literature 3) and the element density distribution (Patent Literature 4) that improve vibration characteristics. However, the inventor has considered that there is a problem in that factors that affect both weight balance and stiffness balance that affect the vibration characteristics are used as targets of optimization.

Therefore, the inventor has conceived a method of using optimization of stiffness balance for sensitivity analysis instead of the sensitivity analysis methods disclosed in Patent Literatures 3 and 4. Specifically, as a method for analyzing sensitivity of an automotive part of an automobile to vibration performance of the automotive part, the inventor has conceived a method in which an influence of weight balance is made as small as possible as a physical property value and optimization calculation is performed using a virtual element leaving only an influence of stiffness balance as a sensitivity determining element.

In addition, the inventor has further studied an analysis method for selecting an automotive part having a structure for increasing stiffness by sensitivity analysis regarding stiffness balance in order to improve vibration-damping properties of a vibration noise reduction target portion without deteriorating other automotive body performance and increasing a weight. In this study, attention has been paid to the fact that local stiffness (plane stiffness) is conventionally improved without increasing the weight by imparting a bead (uneven shape) to a surface of the automotive part.

The inventor has considered that the plane stiffness can be increased by attaching a metal sheet instead of imparting a bead shape to a structural body such as an automotive body. However, if the metal sheet is stuck as it is, not only the stiffness but also the weight increases, and the vibration characteristics are affected by the change in weight distribution. Therefore, in order to increase only local stiffness without changing the weight distribution, the inventor has conceived that this is synonymous with attaching a virtual metal sheet having a virtual weight of 0. Furthermore, it is also important that when the virtual metal sheet having the weight of 0 is attached, automotive body performance other than the vibration characteristics does not deteriorate.

Then, the inventor has considered that in order to perform optimization analysis of obtaining an optimal portion for attaching the metal sheet having the weight of 0, it is only required to perform topology optimization by arranging shell elements in a two-dimensional space along a surface of an automotive part, setting only an elastic coefficient by sufficiently reducing densities of the shell elements. As a result, it has been found that an automotive part having a portion to be changed to a structure that increases stiffness without deteriorating automotive body performance and increasing weight can be selected.

The present invention has been made based on the above findings, and specific configurations thereof are as described below.

### [First Embodiment]

### <Automotive Body Design Apparatus>

An automotive body design apparatus according to a first embodiment of the present invention designs an automotive body in which an automotive part constituting the automotive body is changed to a structure for enhancing stiffness and vibration-damping properties of a vibration noise reduction target portion in the automotive body are improved. As illustrated in FIG. 1 as an example, an automotive body design apparatus 1 is constituted by a personal computer (PC) or the like, and includes a display device 3, an input device 5, a storage device 7, a working data memory 9, and an arithmetic processing unit 11. The display device 3, the input device 5, the storage device 7, and the working data memory 9 are connected to the arithmetic processing unit 11, and each function is executed by a command from the arithmetic processing unit 11. Hereinafter, each configuration of the automotive body design apparatus 1 will be described.

The display device 3 is used for displaying an analysis result or the like, and includes a liquid crystal monitor or the like. The input device 5 is used for a display instruction of the automotive body model file 61, condition input by an operator, and the like, and includes a keyboard, a mouse, and the like. The storage device 7 is used for storing various files such as the automotive body model file 61, and is configured by a hard disk or the like. The working data memory 9 is used for temporary storage and calculation of data used by the arithmetic processing unit 11, and includes a random access memory (RAM) or the like.

As illustrated in FIG. 1, the arithmetic processing unit 11 includes a sensitivity analysis unit 21 and a high-stiffness structure determining unit 31. The arithmetic processing unit 11 is constituted by a central processing unit (CPU) such as a PC, and each of the above-described units functions when the CPU executes a predetermined program. The function of each of the above units in the arithmetic processing unit 11 will be described below.

### <<Sensitivity Analysis Unit>>

The sensitivity analysis unit 21 performs sensitivity analysis for obtaining sensitivity to vibration characteristics used for evaluation of vibration-damping properties of a vibration noise reduction target portion for an automotive part that can be changed to a structure for enhancing stiffness among automotive parts in the automotive body 100.

As illustrated in FIG. 1, the sensitivity analysis unit 21 includes a sensitivity analysis automotive body model generation section 23, a sensitivity determining element material property setting section 25, a sensitivity analysis condition setting section 27, and a sensitivity analysis section 29.

### (Sensitivity Analysis Automotive Body Model Generation Section)

The sensitivity analysis automotive body model generation section 23 arranges a sensitivity determining element in a two-dimensional space along a surface of an automotive part that can be changed to a structure for enhancing stiffness, and connects the arranged sensitivity determining element to the automotive part to generate a sensitivity analysis automotive body model.

The arrangement of the sensitivity determining element can be performed, for example, by dividing the two-dimensional space along the surface of the automotive part into elements using a shell element.

Further, for connecting the sensitivity determining element disposed along the surface of the automotive part and the automotive part, for example, a node of the sensitivity determining element and a node of the automotive part may be connected (rigid joint or elastic joint) by an element (a rigid body element, an elastic body element, or an elastic-plastic body element (elasto-plastic body element)). Alternatively, the sensitivity determining element and the automotive part may be connected by sharing the node between the sensitivity determining element and the automotive part.

### (Sensitivity Determining Element Material Property Setting Section)

The sensitivity determining element material property setting section 25 sets an elastic coefficient and a density as material properties of the sensitivity determining element in the sensitivity analysis automotive body model. The elastic coefficient is set to a value corresponding to a metal material used in the automotive part in which the sensitivity determining element is arranged, and the density is set to a value small enough not to affect the vibration characteristics of the vibration noise reduction target portion in the sensitivity analysis automotive body model.

As the elastic coefficient set in the sensitivity determining element, for example, an elastic coefficient (= 210 GPa) of a steel sheet can be set. However, the sensitivity analysis by the sensitivity analysis unit 21 is intended to obtain sensitivity to local stiffness of the automotive part. Therefore, the elastic coefficient set in the sensitivity determining element is not limited to the value of the elastic coefficient of the steel sheet itself.

The density to be set in the sensitivity determining element needs to be set to such a value that a weight of the shell element as the sensitivity determining element does not affect the vibration characteristics of the vibration noise reduction target portion. Therefore, it is preferable to set 0 as the value of the density of the sensitivity determining element. The value of the density of the sensitivity determining element is not limited to 0, and may be any value as long as the value does not affect the vibration characteristics of the vibration noise reduction target portion.

In a case of setting a sheet thickness of the sensitivity determining element by the sensitivity determining element material property setting section 25, the sheet thickness may be substantially the same as a sheet thickness of a portion of the automotive part where the sensitivity determining element is disposed in an overlapping manner.

### (Sensitivity Analysis Condition Setting Section)

The sensitivity analysis condition setting section 27 sets a vibration input condition, an objective function, and a constraint condition as sensitivity analysis conditions.

The vibration input condition is a condition related to vibration given to the sensitivity analysis automotive body model in the sensitivity analysis. As the vibration input condition, an amplitude (magnitude of vibration), a frequency, a portion that applies vibration to the sensitivity analysis automotive body model, and the like may be set, and for example, may be appropriately set on the assumption of vibration (road noise) input to the automotive body 100 via tires during driving of the automobile. In this case, the portion that applies vibration can be exemplified by a connecting portion (a portion indicated by a triangle in FIG. 2) between the subframe 101 and a lower arm (not illustrated) in the sensitivity analysis automotive body model.

The objective function is a condition to be set according to the vibration characteristics of the vibration noise reduction target portion, and the vibration characteristics used for evaluating the vibration-damping properties of the vibration noise reduction target portion can be set as vibration intensity. The vibration intensity can be a frequency response value of any one of acceleration, inertance, and equivalent emission power in a predetermined frequency band of the vibration noise reduction target portion.

The inertance is vibration characteristics represented by a ratio of a force input to an object and acceleration generated by the force, and is also called a vibrational transfer function (vibration transfer function). The equivalent emission power is an index that simply expresses a level of sound emitted by a vibrating structure, and is vibration characteristics expressed based on an idea that a perpendicular component of a vibration speed of the structure gives energy to an acoustic space.

The objective function may be a function having acceleration, inertance, or equivalent emission power in the predetermined frequency band of the vibration noise reduction target portion as a variable. Examples of the function having the acceleration, the inertance, or the equivalent emission power as a variable include a function that gives an average value or a maximum value of accelerations and the like at a plurality of positions in the automotive part (for example, the panel part or the like) as the target in terms of improving the vibration-damping properties.

A portion for evaluating the vibration characteristics in the vibration noise reduction target portion may be appropriately set according to an instruction of the operator. For example, when the panel part is set as the vibration noise reduction target portion, the portion for evaluating the vibration characteristics may be an entire surface of the panel part or a predetermined portion of the panel part.

The constraint condition is a constraint related to the sensitivity determining element in the sensitivity analysis automotive body model. As the constraint condition regarding the sensitivity determining element, for example, when topology optimization is applied to sensitivity analysis by the sensitivity analysis section 29 to be described later, a constraint that the sensitivity determining element remaining by optimization processing is equal to or less than a predetermined volume ratio can be set. The volume ratio of the sensitivity determining element may be a ratio of a volume occupied by the sensitivity determining element remaining by the optimization processing of the topology optimization to a volume of a design space set for arranging the sensitivity determining element.

### (Sensitivity Analysis Section)

The sensitivity analysis section 29 performs sensitivity analysis under the sensitivity analysis conditions set by the sensitivity analysis condition setting section 27 to obtain sensitivity of the sensitivity determining element to the vibration characteristics of the vibration noise reduction target portion.

For example, topology optimization can be applied to the sensitivity analysis by the sensitivity analysis section 29. In topology optimization using densimetry, a virtual element density of the sensitivity determining element (a virtual density representing a filling state of a material in each shell element) is used as a design variable. By analysis processing of the topology optimization, the sensitivity determining element having a large contribution to the vibration characteristics remains with the element density being a value close to 1, indicating that the sensitivity to the vibration characteristics is high. On the other hand, the sensitivity determining element having a small contribution to the vibration characteristics is erased with the element density being a value close to 0, indicating that the sensitivity to the vibration characteristics is low. As described above, the sensitivity analysis section 29 can obtain the element density calculated for each sensitivity determining element as the sensitivity to the vibration characteristics by applying the topology optimization to the sensitivity analysis.

### <<High-Stiffness Structure Determining Unit>>

The high-stiffness structure determining unit 31 determines a structure for increasing stiffness of an automotive part based on the sensitivity obtained for the automotive part by the sensitivity analysis.

The high-stiffness structure determining unit 31 can determine the structure for enhancing the stiffness of the automotive part by making a position of a sensitivity determining element having high sensitivity obtained for the sensitivity determining element of the automotive part by the sensitivity analysis section 29 to a portion to be changed to the structure for enhancing the stiffness.

The structure for enhancing the stiffness of the automotive part can be determined to be, for example, a structure in which an uneven shape (bead) having a predetermined dimension is imparted to a portion corresponding to the sensitivity determining element having high sensitivity obtained for the automotive part. The dimension of the uneven shape may be appropriately set by the operator. Alternatively, by the sensitivity analysis by the sensitivity analysis section 29, a structure that is directly changed to the uneven shape of the portion corresponding to the sensitivity determining element with high sensitivity obtained for the automotive part may be determined as the structure for enhancing the stiffness of the automotive part.

Further, the high-stiffness structure determining unit 31 may determine a structure that increases stiffness by changing a shape of the automotive part. For example, the surface of the automotive part may have a character line-like surface structure such as a door panel part.

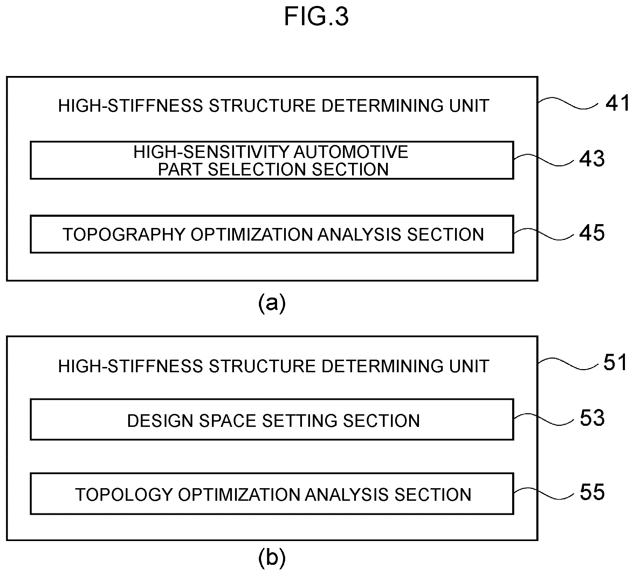

The high-stiffness structure determining unit 31 is not limited to the one that imparts the uneven shape to the portion having high sensitivity or changes the part shape, and may be one that performs topography optimization or topology optimization to determine a structure for enhancing stiffness of an automotive part. FIG. 3 illustrates specific configurations of (a) a high-stiffness structure determining unit 41 that performs topography optimization, and (b) a high-stiffness structure determining unit 51 that performs topology optimization.

### (a) High-Stiffness Structure Determining Unit 41

The high-stiffness structure determining unit 41 illustrated in FIG. 3(a) determines a structure for enhancing stiffness of an automotive part by performing topography optimization, and includes a high-sensitivity automotive part selection section 43 and a topography optimization analysis section 45.

### (High-Sensitivity Automotive Part Selection Section)

The high-sensitivity automotive part selection section 43 selects an automotive part having a large ratio of a highly sensitive sensitivity determining element obtained by the sensitivity analysis section 29 as a high-sensitivity automotive part.

### (Topography Optimization Analysis Section)

The topography optimization analysis section 45 performs topography optimization of obtaining an optimum uneven shape to be imparted to all or a part of a surface of the high-sensitivity automotive part selected by the high-sensitivity automotive part selection section 43. Furthermore, the topography optimization analysis section 45 determines a structure for enhancing stiffness by imparting an uneven shape to the surface of the high-sensitivity automotive part based on the optimum uneven shape obtained by the topography optimization.

In order to perform analysis processing of the topography optimization by the topography optimization analysis section 45, first, a condition regarding the uneven shape (bead) to be applied to the high-sensitivity automotive part is set. Examples of the condition related to the uneven shape include a minimum width and a maximum width of the bead, a bead angle, a bead maximum height, and the like. The operator can appropriately set the conditions related to the uneven shape according to interference with an automotive part existing around the automotive part to which the bead is applied and requirements of the automotive body.

In order to perform the analysis processing of the topography optimization, an objective function, a constraint condition, and a vibration input condition are set as optimization analysis conditions. As the objective function and the vibration input condition, the same vibration input condition and objective function as the sensitivity analysis conditions set by the sensitivity analysis condition setting section 27 may be set. Further, as the constraint condition, a constraint regarding the uneven shape (for example, a minimum width and a maximum width of the bead, a bead angle, a bead maximum height, and the like) may be set.

A range in which the uneven shape (bead) is imparted to the surface of the high-sensitivity automotive part by the topography optimization is preferably set to a flat surface or a portion close to the flat surface of the automotive part. When the automotive part is actually manufactured by press forming, there is a problem that unevenness of beads having various inclinations applied to dies after the press forming hinder the dies from coming off. In addition, when a bead is formed on a mating surface (flange portion) with another part, a gap is generated, it is difficult to join the parts, and joining strength may be reduced. Since vibration noise is generated in a flat surface or a portion close to the flat surface of the part, it is possible to accurately prevent vibration noise by setting the range in which the uneven shape (bead) is imparted to the flat surface or the portion close to the flat surface of the automotive part while avoiding a range in which the above problem is likely to occur by imparting the bead.

### (b) High-Stiffness Structure Determining Unit 51

The high-stiffness structure determining unit 51 illustrated in FIG. 3(b) performs topology optimization to determine a structure for enhancing stiffness of an automotive part, and includes a design space setting section 53 and a topology optimization analysis section 55.

### (Design Space Setting Section)

The design space setting section 53 sets a design space for performing optimization analysis processing for an automotive part having a large ratio of a sensitivity determining element with high sensitivity obtained by the sensitivity analysis unit 21.

For example, the design space setting section 53 can remove an automotive part having a large ratio of a sensitivity determining element with high sensitivity and perform setting in a region from which the automotive part is removed in a sensitivity analysis automotive body model 110. Alternatively, the design space setting section 53 may perform setting along a surface of the automotive part having a large ratio of a sensitivity determining element with high sensitivity.

Furthermore, the design space setting section 53 may set the design space for each automotive part having high sensitivity, or may collectively set the design space for a plurality of automotive parts including the automotive part having high sensitivity.

### (Topology Optimization Analysis Section)

The topology optimization analysis section 55 performs topology optimization of obtaining an optimum shape of the automotive part for the design space set by the design space setting section 53. Furthermore, the topology optimization analysis section 55 determines a structure for enhancing stiffness based on the optimum shape of the automotive part obtained by the topology optimization.

An example of specific processing for performing topology optimization by the topology optimization analysis section 55 is as follows.

First, an optimization analysis block model that is modeled by an element (solid element or shell element) and performs optimization analysis processing on a high-sensitivity portion obtained by the sensitivity analysis section of the present invention is generated.

Next, the generated optimization analysis block model is connected to the sensitivity analysis automotive body model to generate an optimization analysis model. A material property (Young's modulus, specific gravity, density, or the like) of the optimization analysis block model is set to a value corresponding to the material property of the automotive part.

Subsequently, for the optimization analysis model, an objective function, a constraint condition, and a vibration input condition are set as optimization analysis conditions for analysis processing of topology optimization. As the objective function and the vibration input condition, the same vibration input condition and objective function as the sensitivity analysis conditions may be set. The constraint condition is a constraint regarding an optimization analysis block model in topology optimization. As the constraint condition, for example, a weight or volume ratio of the optimized block model may be set within a range not exceeding a weight or volume of the region removed from the automotive part when setting the design space in the design space setting section 53.

Next, under the set optimization analysis conditions, analysis processing of topology optimization of obtaining an optimal structure of the optimization analysis block model is performed.

Then, a structure for increasing stiffness of the automotive part is determined based on the optimum structure of the optimization analysis block model obtained by the topology optimization. For example, a structure for enhancing stiffness may be determined by adding a stiffening part to a portion of an original automotive part for the portion where an element remains in the optimization analysis block model and by providing an opened hole portion or the like for a portion where the element is erased.

In order to ensure performance other than the vibration characteristics, a condition for maintaining stiffness necessary for the optimization constraint condition may be set. In addition, in a case where there is a concern about deterioration in crashworthiness, it is possible to cope with the deterioration by replacing the material to be used with a material having higher strength.

### <Automotive Body Design Method>

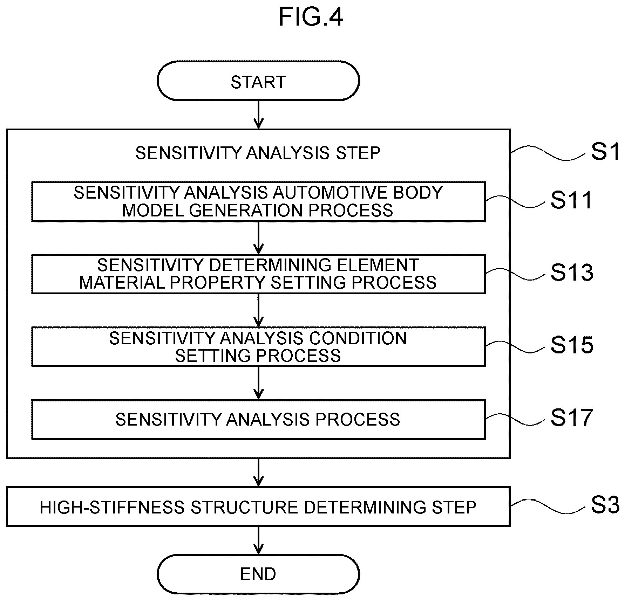

In an automotive body design method according to the first embodiment, a computer executes processing in order to design an automotive body in which an automotive part constituting the automotive body is changed to a structure for enhancing stiffness and vibration-damping properties of a vibration noise reduction target portion in the automotive body are improved. As illustrated in FIG. 4, this processing includes sensitivity analysis step S1 and high-stiffness structure determining step S3. The automotive body design method according to the first embodiment is executed using the automotive body design apparatus 1 (FIG. 1) configured by the computer.

### <<Sensitivity Analysis Step>>

The sensitivity analysis step S1 is a step of performing sensitivity analysis of obtaining sensitivity to vibration characteristics used for evaluation of vibration-damping properties of a vibration noise reduction target portion for an automotive part that can be changed to a structure for enhancing stiffness among automotive parts. As illustrated in FIG. 4, the sensitivity analysis step S1 includes a sensitivity analysis automotive body model generation process S11, a sensitivity determining element material property setting process S13, a sensitivity analysis condition setting process S15, and a sensitivity analysis process S17. In the first embodiment, the sensitivity analysis step S1 is executed by the sensitivity analysis unit 21 of the automotive body design apparatus 1.

### (Sensitivity Analysis Automotive Body Model Generation Process)

The sensitivity analysis automotive body model generation process S11 is a process of arranging a sensitivity determining element in a two-dimensional space along a surface of the automotive part and connecting the arranged sensitivity determining element to the automotive part to generate a sensitivity analysis automotive body model. In the first embodiment, the sensitivity analysis automotive body model generation process S11 is executed by the sensitivity analysis automotive body model generation section 23 of the automotive body design apparatus 1.

### (Sensitivity Determining Element Material Property Setting Process)

The sensitivity determining element material property setting process S13 is a process of setting an elastic coefficient and a density as material properties of the sensitivity determining element in the sensitivity analysis automotive body model. As the elastic coefficient, a value corresponding to a metal material used in the automotive part is set, and as the density, a value small enough not to affect the vibration characteristics of the vibration noise reduction target portion in the sensitivity analysis automotive body model is set. In the first embodiment, the sensitivity determining element material property setting process S13 is executed by the sensitivity determining element material property setting section 25 of the automotive body design apparatus 1. The value of the density of the sensitivity determining element is not limited to 0, and a value that does not affect the vibration characteristics of the vibration noise reduction target portion may be appropriately set.

### (Sensitivity Analysis Condition Setting Process)

The sensitivity analysis condition setting process S15 is a process of setting a vibration input condition related to vibration to be applied to the sensitivity analysis automotive body model as a sensitivity analysis condition. Further, the sensitivity analysis condition setting process S15 is a process of setting an objective function related to the vibration characteristics of the vibration noise reduction target portion in the sensitivity analysis automotive body model and a constraint condition related to the sensitivity determining element in the sensitivity analysis automotive body model as sensitivity analysis conditions. In the first embodiment, the sensitivity analysis condition setting process S15 is executed by the sensitivity analysis condition setting section 27 of the automotive body design apparatus 1.

As the vibration input condition, an amplitude (magnitude of vibration), a frequency, a portion that applies vibration to the sensitivity analysis automotive body model, and the like may be set, and for example, may be appropriately set on the assumption of vibration (road noise) input to the automotive body 100 via tires during driving of the automobile. In addition, as the vibration input condition, it is possible to set that a predetermined vibration is input to one or two or more portions with respect to the sensitivity analysis automotive body model.

The objective function can be minimization of a frequency response value of any one of acceleration, inertance, and equivalent emission power in a predetermined frequency band of the vibration noise reduction target portion, or minimization of a function using these as variables.

As the constraint condition, for example, when topology optimization is applied to sensitivity analysis in the sensitivity analysis process S17 to be described later, a constraint that the sensitivity determining element remaining by the optimization processing is equal to or less than a predetermined volume ratio can be set.

### (Sensitivity Analysis Process)

In the sensitivity analysis process S17, sensitivity analysis is performed under the sensitivity analysis conditions set in the sensitivity analysis condition setting process S15 to obtain sensitivity of the sensitivity determining element to the vibration characteristics of the vibration noise reduction target portion. In the first embodiment, the sensitivity analysis process S17 is executed by the sensitivity analysis section 29 of the automotive body design apparatus 1.

In the sensitivity analysis process S17, topology optimization can be performed on the sensitivity determining element arranged on the automotive part. The sensitivity determining element in the automotive part remaining by the topology optimization analysis processing can be obtained as a portion having high sensitivity to the vibration characteristics of the vibration noise reduction target portion in the automotive part.

### <<High-Stiffness Structure Determining Step>>

The high-stiffness structure determining step S3 is a step of determining a structure for enhancing stiffness of the automotive part based on the sensitivity obtained for the automotive part by the sensitivity analysis in the sensitivity analysis step S1. In the first embodiment, the high-stiffness structure determining step S3 is executed by the high-stiffness structure determining unit 31 of the automotive body design apparatus 1.

In the high-stiffness structure determining step S3, a structure for enhancing stiffness can be determined with respect to a position of the sensitivity determining element having high sensitivity obtained for the sensitivity determining element of the automotive part in the sensitivity analysis step S1.

In the high-stiffness structure determining step S3, for example, a structure in which an uneven shape (bead) having a predetermined dimension is imparted to a portion corresponding to the sensitivity determining element having high sensitivity obtained for the automotive part can be determined as a structure for enhancing stiffness of the automotive part. The dimension of the uneven shape may be appropriately set.

Alternatively, in the high-stiffness structure determining step S3, a structure changed as it is to the shape of the portion corresponding to the sensitivity determining element with high sensitivity obtained for the automotive part may be determined as the structure for enhancing the stiffness of the automotive part.

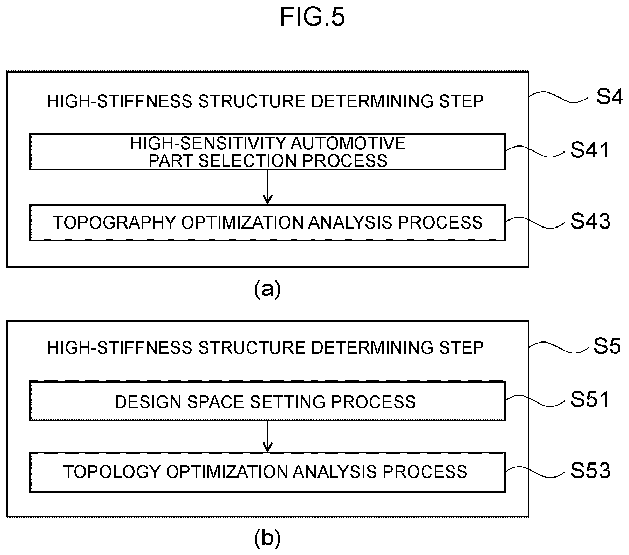

In the high-stiffness structure determining step, not only the uneven shape is imparted to the portion having high sensitivity or the part shape is changed, but also topography optimization or topology optimization may be performed to determine the structure for enhancing the stiffness of the automotive part. FIG. 5 illustrates specific configurations of a high-stiffness structure determining step S4 of performing topography optimization and a high-stiffness structure determining step S5 of performing topology optimization.

### (a) High-Stiffness Structure Determining Step S4

The high-stiffness structure determining step S4 illustrated in FIG. 5(a) determines a structure for enhancing stiffness of an automotive part by performing topography optimization, and includes a high-sensitivity automotive part selection process S41 and a topography optimization analysis process S43. Then, the high-stiffness structure determining step S4 illustrated in FIG. 5(a) is executed by the high-stiffness structure determining unit 41 illustrated in FIG. 3(a).

### (High-Sensitivity Automotive Part Selection process)

The high-sensitivity automotive part selection process S41 is a process of selecting, as a high-sensitivity automotive part, an automotive part having a large ratio of a highly sensitive sensitivity determining element obtained in the sensitivity analysis process S17 among automotive parts. The high-sensitivity automotive part selection process S41 can be executed by the high-sensitivity automotive part selection section 43 of the automotive body design apparatus 1 (FIG. 3(a)).

### (Topography Optimization Analysis Process)

In the topography optimization analysis process S43, topography optimization for obtaining an optimum uneven shape to be imparted to a surface of the high-sensitivity automotive part selected in the high-sensitivity automotive part selection process S41 is performed. Furthermore, in the topography optimization analysis process S43, a structure for enhancing stiffness is determined by imparting the uneven shape to the surface of the high-sensitivity automotive part based on the optimum uneven shape obtained by the topography optimization. The topography optimization analysis process S43 can be executed by the topography optimization analysis section 45 of the automotive body design apparatus 1 (FIG. 3(a)).

### (b) High-Stiffness Structure Determining Step S5

The high-stiffness structure determining step S5 illustrated in FIG. 5(b) illustrates a configuration of a step of determining a structure for enhancing stiffness of an automotive part by performing topology optimization, and includes a design space setting process S51 and a topology optimization analysis process S53.

### (Design Space Setting Process)

The design space setting process S51 sets a process of setting a design space for performing optimization analysis processing for an automotive part having a large ratio of the sensitivity determining element with high sensitivity obtained in the sensitivity analysis step S1 among automotive parts. The design space setting process S51 can be executed by the design space setting section 53 of the high-stiffness structure determining unit 51 illustrated in FIG. 3(b).

In the design space setting process S51, for example, an automotive part having a large ratio of a sensitivity determining element with high sensitivity can be removed, and setting can be performed on a region from which the automotive part is removed in the sensitivity analysis automotive body model 110. Alternatively, in the design space setting process S51, setting may be performed along a surface of the automotive part having a large ratio of a sensitivity determining element with high sensitivity.

Furthermore, in the design space setting process S51, the design space may be set for each automotive part having high sensitivity, or the design space may be set collectively for a plurality of automotive parts including the automotive part having high sensitivity.

### (Topology Optimization Analysis Process)

In the topology optimization analysis process S53, topology optimization of obtaining an optimum shape of the automotive part is performed on the design space set in the design space setting process S51. Furthermore, in the topology optimization analysis process S53, a structure for enhancing stiffness is determined based on the optimum shape of the automotive part obtained by topology optimization. The topology optimization analysis process S53 is executed by the topology optimization analysis section 55 of the high-stiffness structure determining unit 51 illustrated in FIG. 3(b), the structure for enhancing the stiffness of the automotive part can be determined.

### <Effects of First Embodiment>

Next, effects of the automotive body design method and apparatus according to the first embodiment will be described. Here, processing in the automotive body design method according to the first embodiment will be described for a case of determining a structure for enhancing stiffness of an automotive part in order to improve vibration-damping properties of the roof panel 105 as a vibration noise reduction target portion of the automotive body 100 illustrated in FIG. 2. Although the following description relates to the effects of the automotive body design method, the same effects can be obtained by the automotive body design apparatus 1 according to the first embodiment.

First, in executing the sensitivity analysis step S1, mesh data (mesh model) and the like of each automotive part constituting the automotive body 100 were acquired from the automotive body model file 61 stored in the storage device 7. Then, an automotive part other than an outer panel such as the roof panel 105 was selected as an automotive part that can be changed to a structure for enhancing stiffness.

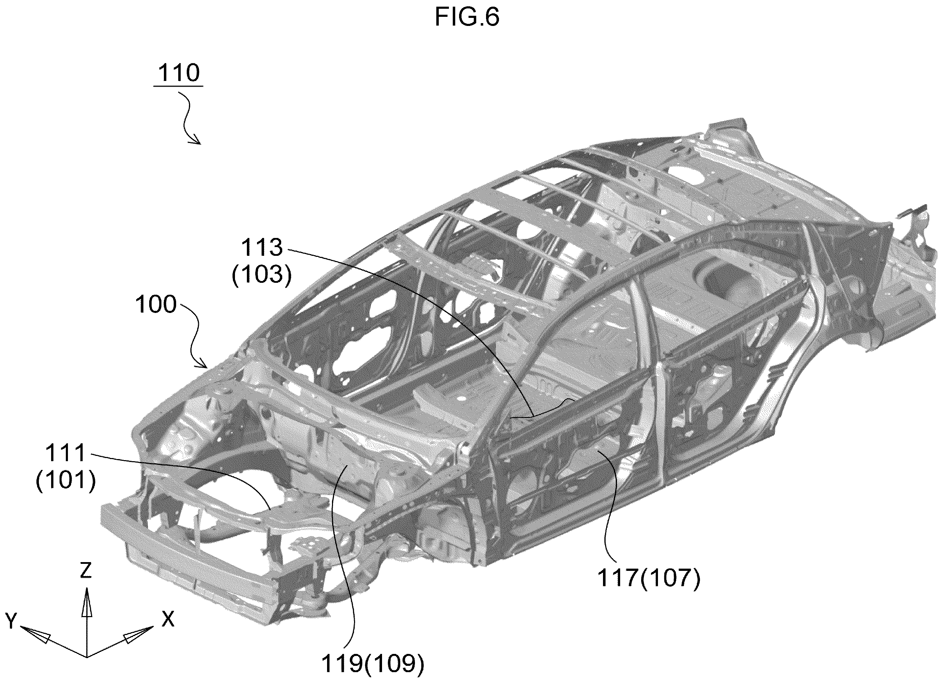

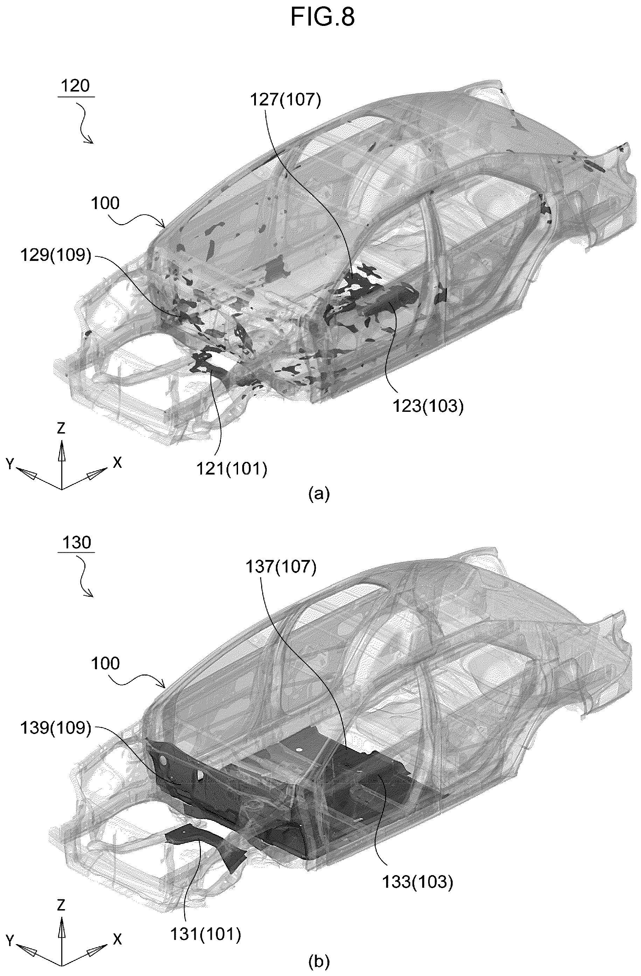

Next, in the sensitivity analysis automotive body model generation process S11, as illustrated in FIG. 6, a sensitivity determining element was arranged in a two-dimensional space along a surface of the automotive part other than the outer panel such as the roof panel 105. In FIG. 6, the sensitivity determining elements were arranged for all the automotive parts, and particularly, the automotive parts corresponding to FIG. 8(a) to be described later were denoted by reference numerals 111, 113, 117, and 119. Then, the arranged sensitivity determining elements were connected to the automotive parts to generate a sensitivity analysis automotive body model 110. The sensitivity determining element was a shell element, and was connected to the automotive part by a rigid body beam element.

Subsequently, in the sensitivity determining element material property setting process S13, a material property was set in the sensitivity determining element in the sensitivity analysis automotive body model 110. Here, as the material properties, an elastic coefficient was an elastic coefficient (210 GPa) of a steel sheet used for each automotive part, and a density was 0.

Further, in the sensitivity analysis condition setting process S15, a vibration input condition, an objective function, a constraint condition, and the vibration input condition were set.

The vibration input condition was a condition in which vibration with an amplitude of 1 N and a frequency of 1 to 200 Hz is input to a connecting portion (a portion marked with a triangle in FIG. 2) between the subframe 101 and the lower arm (not illustrated) in the sensitivity analysis automotive body model 110 assuming road noise during driving of the automobile.

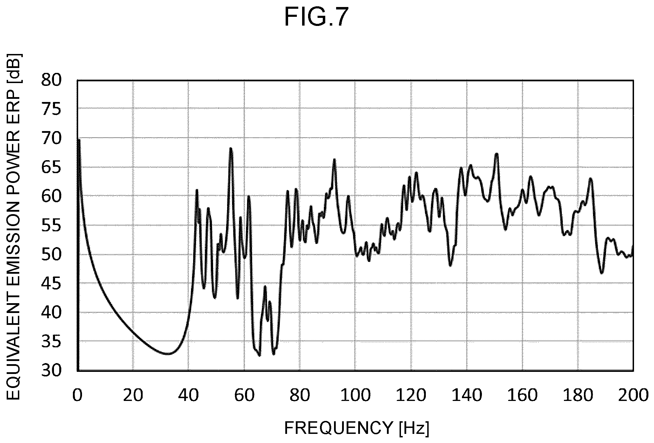

In addition, the objective function was minimization of a peak value in a frequency band of 110 Hz to 180 Hz of equivalent emission power ERP of the roof panel 105. FIG. 7 illustrates a frequency response value of the equivalent emission power of the roof panel 105 when the above-described vibration input condition was applied to the automotive body 100. Further, as the constraint condition, a volume ratio of the sensitivity determining element was set to 10% or less.

Next, in the sensitivity analysis process S17, the sensitivity analysis conditions set as described above were given to the sensitivity analysis automotive body model 110 to perform sensitivity analysis.

FIG. 8(a) illustrates a result of sensitivity determining elements remaining after the sensitivity analysis. It can be seen that a ratio of the sensitivity determining elements (111, 113, 117 and 119) remaining in the subframe 101, the tunnel 103, the floor panel 107, and the dash panel 109 is large.

Subsequently, in the high-stiffness structure determining step S4 for performing topography optimization, a structure for increasing stiffness was determined for the automotive part.

First, in the high-sensitivity automotive part selection process S41, an automotive part having high sensitivity to vibration characteristics of the roof panel 105 was selected as a high-sensitivity automotive part. Here, as illustrated in FIG. 8(b), a part of the subframe 101, the tunnel 103, the floor panel 107, and the dash panel 109 were selected as high-sensitivity automotive parts 131, 133, 137, and 139 from the sensitivity result illustrated in FIG. 8(a).

Next, in the topography optimization analysis process S43, topography optimization for obtaining an optimum uneven shape to be imparted to a surface of the high-sensitivity automotive part was performed. In the topography optimization, constraint conditions on the uneven shape were a minimum width of 15 mm, a maximum width of 30 mm, a bead angle of 80°, and a bead maximum height of 7 mm. Further, the same vibration input condition and objective function as the sensitivity analysis conditions were set as optimization analysis conditions in the topography optimization.

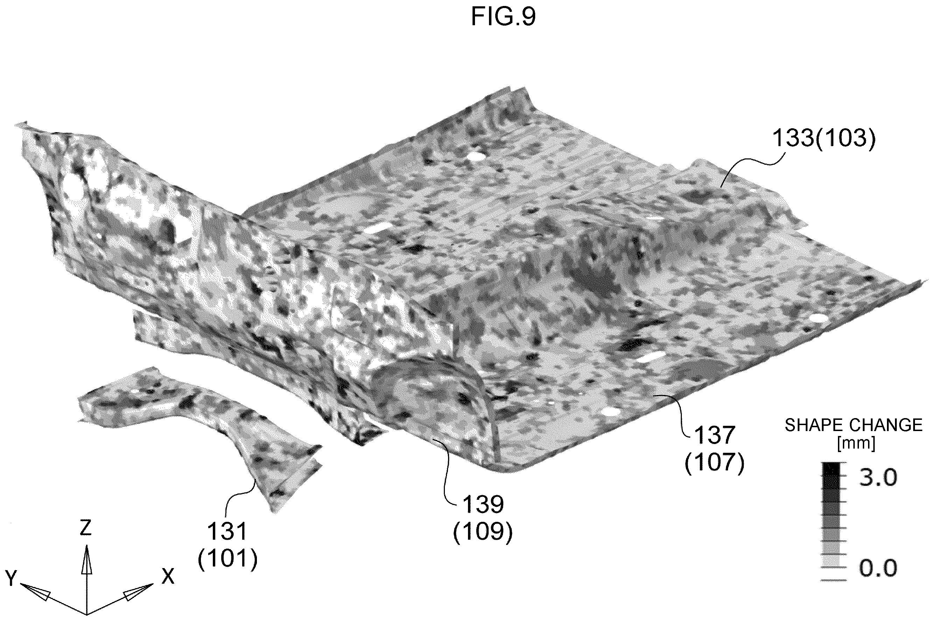

FIG. 9 illustrates a result of obtaining a distribution of the optimum uneven shape by the topography optimization for the high-sensitivity automotive parts (131, 133, 137, 139) under the conditions related to the uneven shape and the optimization analysis conditions described above.

Then, a structure for enhancing stiffness was determined by imparting the uneven shape to a part of the subframe 101, and surfaces of the tunnel 103, the floor panel 107, and the dash panel 109 which are high-sensitivity automotive parts based on the result illustrated in FIG. 9.

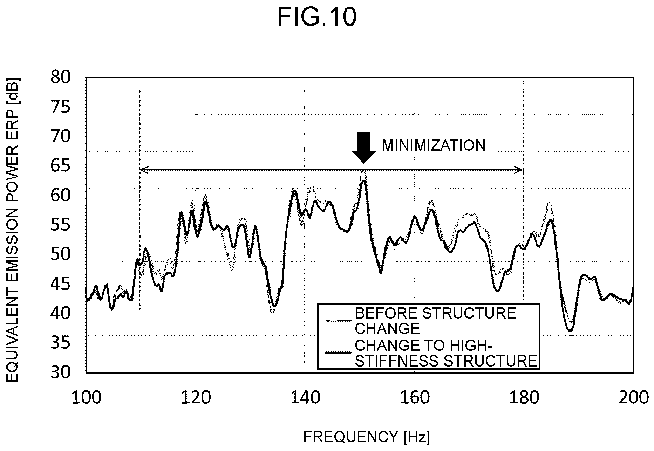

Further, vibration-damping properties of the roof panel 105 were evaluated by changing to a structure in which stiffness is enhanced by imparting the uneven shape to the tunnel 103, the floor panel 107, and the dash panel 109. FIG. 10 illustrates a result of a frequency response of equivalent emission power of the roof panel 105 when the above vibration input condition was applied to the automotive body 100 in which the tunnel 103, the floor panel 107, and the dash panel 109 are changed to the structure for enhancing the stiffness. FIG. 10 also illustrates a result of obtaining a frequency response of equivalent emission power of the roof panel 105 for the automotive body 100 before structure change of the tunnel 103, the floor panel 107, and the dash panel 109 (FIG. 7).

As illustrated in FIG. 10, a result was obtained in which the maximum value of the equivalent emission power in a frequency band of 110 Hz to 180 Hz is decreased by 1.6 dB (before structure change: 67.5 dB, after change to high-stiffness structure: 65.9 dB), and it has been shown that the vibration-damping properties of the roof panel 105 are improved.

The vibration-damping properties of the roof panel 105 were also evaluated in a case where a structure in which an uneven shape is imparted to a portion corresponding to the sensitivity determining element with high sensitivity obtained for each automotive part is determined as a structure for enhancing stiffness of the automotive part (high-stiffness structure determining step S3). Here, as illustrated in FIG. 8(a), a structure in which a part of the subframe 101, the tunnel 103, the floor panel 107, and the dash panel 109 are provided with an uneven shape having a height of about 5.0 mm at a portion corresponding to a sensitivity determining element having high sensitivity was determined as a high stiffness structure.

A frequency response of equivalent emission power of the roof panel 105 was obtained for the automotive body 100 changed to the high-stiffness structure thus determined. As a result, the maximum value in the frequency band of 110 Hz to 180 Hz was decreased by 1.0 dB (before structure change: 67.5 dB, after change to high-stiffness structure: 66.5 dB, not illustrated). From this result, it has been found that, when the uneven shape was imparted to the portion corresponding to the sensitivity determining element having high sensitivity by the sensitivity analysis, an effect was lower than that when the uneven shape having the optimum shape obtained by the topography optimization was imparted, but vibration-damping properties of the roof panel 105 were significantly improved.

Furthermore, vibration-damping properties of the roof panel 105 were also evaluated in a case where a high-sensitivity automotive part was selected based on sensitivity analysis, topology optimization was performed on the selected high-sensitivity automotive part, and a high-stiffness structure was determined (high-stiffness structure determining step S5). Here, as illustrated in FIG. 8(b) described above, a part of the subframe 101, the tunnel 103, the floor panel 107, and the dash panel 109 were selected as the high-sensitivity automotive parts 131, 133, 137, and 139. Then, a design space including a three-dimensional solid element was set in the vicinity of each high-sensitivity automotive part, a remaining shape was obtained by topology optimization, and a high-stiffness structure of the high-sensitivity automotive part was determined based on the remaining shape. The same vibration input condition and objective function as the sensitivity analysis conditions were used as optimization analysis conditions of the topology optimization for obtaining the remaining shape of the high-sensitivity automotive part.

A frequency response of equivalent emission power of the roof panel 105 was obtained for the automotive body 100 changed to the high-stiffness structure thus determined. As a result, the maximum value of the equivalent emission power in the frequency band of 110 Hz to 180 Hz was decreased by 1.8 dB (before structure change: 67.5 dB, after change to high-stiffness structure: 65.7 dB, not illustrated). From this result, it has been shown that when the high-stiffness structure of the high-sensitivity automotive part was determined by topology optimization, the vibration-damping properties of the roof panel were slightly improved as compared with the case where the high-stiffness structure was determined by topography optimization.

As described above, in the automotive body design method and apparatus according to the first embodiment, sensitivity analysis is performed on an automotive part in the automotive body to obtain a degree of contribution (sensitivity) of local stiffness to vibration characteristics of a vibration noise reduction target portion without considering an influence of weight. In the sensitivity analysis, the sensitivity to the vibration-damping properties of the vibration noise reduction target portion is obtained not only for the vibration noise reduction target portion such as the panel part but also for the automotive body frame part and the reinforcing part from the vibration source to the vibration noise reduction target portion in the automobile. Furthermore, a structure for increasing stiffness of the automotive part is determined based on the sensitivity obtained by the sensitivity analysis. As a result, it is possible to design an automotive body in which the vibration-damping properties of the vibration noise reduction target portion are improved without deteriorating other automotive body performance such as automotive body stiffness and crashworthiness and without increasing the weight.

### <Automotive Body Design Program>

The above description of the first embodiment of the present invention relates to the automotive body design method and apparatus. However, the present invention can be configured as an automotive body design program that causes each unit in the arithmetic processing unit 11 of the automotive body design apparatus 1 (FIG. 1) configured by a computer to function.

An automotive body design program according to the first embodiment designs an automotive body in which an automotive part constituting the automotive body is changed to a structure for enhancing stiffness and vibration-damping properties of a vibration noise reduction target portion in the automotive body are improved. The automotive body design program according to the first embodiment causes the computer to function as the sensitivity analysis unit 21 and the high-stiffness structure determining unit 31 as in the arithmetic processing unit 11 illustrated in FIG. 1.

The automotive body design program according to the first embodiment causes each section included in the sensitivity analysis unit 21 to function in order to cause the computer to function as the sensitivity analysis unit 21. As illustrated in FIG. 1 described above, the sensitivity analysis unit 21 includes the sensitivity analysis automotive body model generation section 23, the sensitivity determining element material property setting section 25, the sensitivity analysis condition setting section 27, and the sensitivity analysis section 29.

The high-stiffness structure determining unit 31 illustrated in FIG. 1 functions to determine a structure for enhancing stiffness of an automotive part by, for example, imparting an uneven shape to a portion having high sensitivity obtained by the sensitivity analysis section 29.

However, the automotive body design program according to the first embodiment may have a function of causing the computer to execute as the high-stiffness structure determining unit 41 illustrated in FIG. 3(a). In this case, the automotive body design program according to the first embodiment causes the high-stiffness structure determining unit 41 (FIG. 3(b)) to function as the high-sensitivity automotive part selection section 43 and the topography optimization analysis section 45.

Alternatively, the automotive body design program according to the first embodiment may cause the computer to function as the high-stiffness structure determining unit 51 illustrated in FIG. 3(b). In this case, the automotive body design program according to the first embodiment causes the high-stiffness structure determining unit 51 (FIG. 3(b)) to function as the design space setting section 53 and the topology optimization analysis section 55.

By executing the automotive body design program according to the first embodiment by the computer, the same effects as those of the automotive body design method and apparatus according to the first embodiment described above can be obtained.

In the above description, the topology optimization is applied to the sensitivity analysis, but the present invention may apply sheet thickness optimization to the sensitivity analysis.

Also in the sensitivity analysis to which the sheet thickness optimization is applied, first, a sensitivity determining element is arranged in a two-dimensional space along a surface of an automotive part in an automotive body to generate a sensitivity analysis automotive body model.

Next, in the sensitivity determining element in the sensitivity analysis automotive body model, as material properties, an elastic coefficient corresponding to a metal sheet used in the automotive part in which the sensitivity determining element is arranged and a density of a small value to an extent that vibration characteristics of a vibration noise reduction target portion are not affected are set.

Further, a sensitivity analysis condition is set similarly to the sensitivity analysis to which the topology optimization is applied. Here, as the constraint condition set as the sensitivity analysis condition, a sheet thickness related to the sensitivity determining element may be set.

Subsequently, by executing analysis processing of the sheet thickness optimization regarding the sheet thickness of the sensitivity determining element in the sensitivity analysis automotive body model under the set sensitivity analysis condition, an optimal sheet thickness is calculated for each sensitivity determining element arranged in the automotive part.

The sensitivity determining element in which the sheet thickness obtained by the sheet thickness optimization is larger than an original sheet thickness has high sensitivity to the vibration characteristics of the vibration noise reduction target portion, and the sensitivity determining element in which the sheet thickness is smaller than the original sheet thickness has low sensitivity to the vibration characteristics of the vibration noise reduction target portion. As described above, even in a case where the sheet thickness optimization is applied, it is possible to specify a portion having a high degree of contribution (sensitivity) to the vibration characteristics related to evaluation of vibration-damping properties of the vibration noise reduction target portion with respect to the automotive part.

In the above description, the sensitivity is obtained for each sensitivity determining element, but the present invention may obtain sensitivity for each automotive part. In this case, a structure for enhancing stiffness may be determined for an entire automotive part having high sensitivity. Alternatively, topography optimization or topology optimization may be performed on the automotive part having high sensitivity to determine a structure for increasing stiffness.

### [Second Embodiment]

A method for manufacturing an automotive body according to a second embodiment of the present invention manufactures an automotive body in which an automotive part constituting the automotive body is changed to a structure for enhancing stiffness and vibration-damping properties of a vibration noise reduction target portion in the automotive body are improved.

In the method for manufacturing the automotive body according to the second embodiment, first, using the automotive body design method according to the first embodiment described above, a structure for increasing stiffness of the automotive part is determined based on sensitivity to vibration characteristics used for evaluation of the vibration-damping properties of the vibration noise reduction target portion.

The structure for enhancing the stiffness may be, for example, a structure in which an uneven shape is imparted to a portion having high sensitivity obtained by sensitivity analysis, or a structure in which a shape of the portion having high sensitivity is changed.

In addition, an automotive part having a large ratio of a highly sensitive sensitivity determining element obtained by the sensitivity analysis may be selected as a high-sensitivity automotive part, and an optimum uneven shape to be imparted to a surface of the high-sensitivity automotive part may be obtained by topography optimization to determine a structure for enhancing stiffness.

Furthermore, a design space may be set for the automotive part having a large ratio of the highly sensitive sensitivity determining element obtained by the sensitivity analysis, and a structure for enhancing stiffness of the automotive part may be determined by topology optimization.

In a case where the structure for enhancing the stiffness is a structure in which an uneven shape (bead) is imparted to the automotive part, when it is difficult to manufacture the automotive part to which the uneven shape (bead) is imparted, smoothing may be further performed in accordance with a constraint at the time of manufacturing the actual automotive part. By determining an uneven shape (bead) subjected to the smoothing as the uneven shape (bead) to be imparted to the automotive part, it is easy to manufacture the automotive part to which the uneven shape (bead) is imparted. In a case where a structure for increasing stiffness is determined by topology optimization by adding a stiffening part to a portion of an original automotive part for the portion where an element remains in an optimization analysis block model and providing an opened hole portion for a portion where the element is erased, smoothing, shape optimization processing, and the like may be further performed in accordance with a constraint at the time of manufacturing of the actual automotive part.

Then, an automotive part having the structure for enhancing the stiffness thus determined is manufactured. For example, in a case of a structure provided with an uneven shape, the automotive part can be manufactured by simultaneously providing the uneven shape in a process of manufacturing the automotive part by press forming. As a specific example of an aspect of manufacturing the automotive part having the structure for enhancing the stiffness, three-dimensional position data of the structure for enhancing the stiffness is input to a CAD/CAM program in cooperation with a numerically-controlled machine (NC machine), and CAD data of the corresponding automotive part is changed. CAD data of dies for press forming is created based on the changed CAD data of the automotive part, and is converted into numerical control data (NC data) (numerical control program (NC program)) for NC machining. The NC machine machines a casting die model made of expanded polystyrene or a metal die made of steel material by a full mold casting method (evaporative pattern casting method). Then, using the NC data (NC program), the casting die model made of expanded polystyrene or the metal die made of steel material is manufactured by the NC machine. Accordingly, it is possible to manufacture press forming dies used for actual press forming for manufacturing the automotive part having the structure for enhancing stiffness.

As described above, according to the method for manufacturing the automotive body of the second embodiment, it is possible to manufacture the automotive body in which the vibration-damping properties of the vibration noise reduction target portion are improved without deteriorating automotive body performance such as automotive body stiffness and crashworthiness and without increasing a weight.

### Industrial Applicability

According to the present invention, it is possible to provide an automotive body design method, apparatus, and program for designing an automotive body in which vibration-damping properties of a vibration noise reduction target portion are improved without deteriorating automotive body performance, and a method for manufacturing the automotive body.

### Reference Signs List

1 AUTOMOTIVE BODY DESIGN APPARATUS
3 DISPLAY DEVICE
5 INPUT DEVICE
7 STORAGE DEVICE
9 WORKING DATA MEMORY
11 ARITHMETIC PROCESSING UNIT
21 SENSITIVITY ANALYSIS UNIT
23 SENSITIVITY ANALYSIS AUTOMOTIVE BODY MODEL GENERATION SECTION
25 SENSITIVITY DETERMINING ELEMENT MATERIAL PROPERTY SETTING SECTION
27 SENSITIVITY ANALYSIS CONDITION SETTING SECTION
29 SENSITIVITY ANALYSIS SECTION
31 HIGH-STIFFNESS STRUCTURE DETERMINING UNIT
41 HIGH-STIFFNESS STRUCTURE DETERMINING UNIT
43 HIGH-SENSITIVITY AUTOMOTIVE PART SELECTION SECTION
45 TOPOGRAPHY OPTIMIZATION ANALYSIS SECTION
51 HIGH-STIFFNESS STRUCTURE DETERMINING UNIT
53 DESIGN SPACE SETTING SECTION
55 TOPOLOGY OPTIMIZATION ANALYSIS SECTION
61 AUTOMOTIVE BODY MODEL FILE
100 AUTOMOTIVE BODY
101 SUBFRAME
103 TUNNEL
105 ROOF PANEL
107 FLOOR PANEL
109 DASH PANEL
110 SENSITIVITY ANALYSIS AUTOMOTIVE BODY MODEL
111, 113, 115, 117 SENSITIVITY DETERMINING ELEMENT
121, 123, 125, 127 SENSITIVITY DETERMINING ELEMENT REMAINING BY TOPOLOGY OPTIMIZATION
131, 133, 137, 139 HIGH-SENSITIVITY AUTOMOTIVE PART

## Claims

1. An automotive body design method executed by a computer for designing an automotive body in which an automotive part constituting the automotive body is changed to a structure for enhancing stiffness and vibration-damping properties of a vibration noise reduction target portion in the automotive body are improved, the method comprising:
a sensitivity analysis step of performing sensitivity analysis for obtaining sensitivity to vibration characteristics used for evaluation of the vibration-damping properties of the vibration noise reduction target portion for an automotive part changeable to a structure for enhancing stiffness; and
a high-stiffness structure determining step of determining a structure for enhancing stiffness of the automotive part based on the sensitivity obtained for the automotive part by the sensitivity analysis, wherein
the sensitivity analysis step includes:
a sensitivity analysis automotive body model generation step of arranging a sensitivity determining element in a two-dimensional space along a surface of the automotive part and connecting the arranged sensitivity determining element to the automotive part to generate a sensitivity analysis automotive body model,
a sensitivity determining element material property setting step of setting, as material properties of the sensitivity determining element in the sensitivity analysis automotive body model, an elastic coefficient corresponding to a metal material used in the automotive part and a density of a value small enough not to affect vibration characteristics of the vibration noise reduction target portion in the sensitivity analysis automotive body model,
a sensitivity analysis condition setting step of setting, as sensitivity analysis conditions in the sensitivity analysis, a vibration input condition related to vibration to be given to the sensitivity analysis automotive body model, an objective function related to the vibration characteristics of the vibration noise reduction target portion in the sensitivity analysis automotive body model, and a constraint condition related to the sensitivity determining element in the sensitivity analysis automotive body model, and
a sensitivity analysis step of performing the sensitivity analysis under the set sensitivity analysis conditions and obtaining sensitivity of the sensitivity determining element to the vibration characteristics of the vibration noise reduction target portion.

2. The automotive body design method according to claim 1, wherein
in the sensitivity analysis condition setting step,
the vibration input condition is that a predetermined vibration is input to one or two or more portions of the sensitivity analysis automotive body model,
the objective function is that minimization of a frequency response value of any one of acceleration, inertance, and equivalent emission power in a predetermined frequency band of the vibration noise reduction target portion, or minimization of a function using these as variables, and
the constraint condition is that a volume ratio of the sensitivity determining element is a predetermined value or less, and
in the sensitivity analysis step, topology optimization is performed on the sensitivity determining element arranged in the automotive part, and the sensitivity determining element in the automotive part remaining by analysis processing of the topology optimization is obtained as a portion having high sensitivity to the vibration characteristics of the vibration noise reduction target portion in the automotive part.

3. The automotive body design method according to claim 1 or 2, wherein in the high-stiffness structure determining step, a structure in which an uneven shape having a predetermined dimension is imparted to a portion corresponding to the sensitivity determining element having high sensitivity obtained for the automotive part is determined as a structure in which stiffness of the automotive part is enhanced.

4. The automotive body design method according to claim 1 or 2, wherein the high-stiffness structure determining step includes:
a high-sensitivity automotive part selection step of selecting, as a high-sensitivity automotive part, an automotive part having a large ratio of the sensitivity determining element having high sensitivity obtained by the sensitivity analysis among the automotive parts, and
a topography optimization analysis step of performing topography optimization of obtaining an optimum uneven shape to be imparted to a surface of the selected high-sensitivity automotive part, and determining a structure for enhancing stiffness of the high-sensitivity automotive part based on the optimum uneven shape obtained by the topography optimization.

5. The automotive body design method according to claim 1 or 2, wherein the high-stiffness structure determining step includes:
a design space setting step of selecting an automotive part having a large ratio of the sensitivity determining element having high sensitivity obtained by the sensitivity analysis among the automotive parts, and setting a design space along a surface of the selected automotive part, and
a topology optimization analysis step of performing topology optimization of obtaining an optimum shape of the automotive part in which the design space is set, and determining a structure for enhancing stiffness of the automotive part based on the optimum shape of the automotive part obtained by the topology optimization.

6. An automotive body design apparatus for designing an automotive body in which an automotive part constituting the automotive body is changed to a structure for enhancing stiffness and vibration-damping properties of a vibration noise reduction target portion in the automotive body are improved, the automotive body design apparatus comprising:
a sensitivity analysis unit configured to perform sensitivity analysis for obtaining sensitivity to vibration characteristics used for evaluation of the vibration-damping properties of the vibration noise reduction target portion for an automotive part changeable to a structure for enhancing stiffness; and
a high-stiffness structure determining unit configured to determine a structure for enhancing stiffness of the automotive part based on the sensitivity obtained for the automotive part by the sensitivity analysis, wherein
the sensitivity analysis unit includes:
a sensitivity analysis automotive body model generation section configured to arrange a sensitivity determining element in a two-dimensional space along a surface of the automotive part and connect the arranged sensitivity determining element to the automotive part to generate a sensitivity analysis automotive body model,
a sensitivity determining element material property setting section configured to set, as material properties of the sensitivity determining element in the sensitivity analysis automotive body model, an elastic coefficient corresponding to a metal material used in the automotive part and a density of a value small enough not to affect vibration characteristics of the vibration noise reduction target portion in the sensitivity analysis automotive body model,
a sensitivity analysis condition setting section configured to set, as sensitivity analysis conditions in the sensitivity analysis, a vibration input condition related to vibration to be given to the sensitivity analysis automotive body model, an objective function related to the vibration characteristics of the vibration noise reduction target portion in the sensitivity analysis automotive body model, and a constraint condition related to the sensitivity determining element in the sensitivity analysis automotive body model, and
a sensitivity analysis section configured to perform the sensitivity analysis under the set sensitivity analysis conditions and obtain sensitivity of the sensitivity determining element to the vibration characteristics of the vibration noise reduction target portion.

7. An automotive body design program for designing an automotive body in which an automotive part constituting the automotive body is changed to a structure for enhancing stiffness and vibration-damping properties of a vibration noise reduction target portion in the automotive body are improved, the automotive body design program causing a computer to function as:
a sensitivity analysis unit configured to perform sensitivity analysis for obtaining sensitivity to vibration characteristics used for evaluation of the vibration-damping properties of the vibration noise reduction target portion for an automotive part changeable to a structure for enhancing stiffness; and
a high-stiffness structure determining unit configured to determine a structure for enhancing stiffness of the automotive part based on the sensitivity obtained for the automotive part by the sensitivity analysis, wherein
the sensitivity analysis unit includes:
a sensitivity analysis automotive body model generation section configured to arrange a sensitivity determining element in a two-dimensional space along a surface of the automotive part and connect the arranged sensitivity determining element to the automotive part to generate a sensitivity analysis automotive body model,
a sensitivity determining element material property setting section configured to set, as material properties of the sensitivity determining element in the sensitivity analysis automotive body model, an elastic coefficient corresponding to a metal material used in the automotive part and a density of a value small enough not to affect vibration characteristics of the vibration noise reduction target portion in the sensitivity analysis automotive body model,
a sensitivity analysis condition setting section configured to set, as sensitivity analysis conditions in the sensitivity analysis, a vibration input condition related to vibration to be given to the sensitivity analysis automotive body model, an objective function related to the vibration characteristics of the vibration noise reduction target portion in the sensitivity analysis automotive body model, and a constraint condition related to the sensitivity determining element in the sensitivity analysis automotive body model, and
a sensitivity analysis section configured to perform the sensitivity analysis under the set sensitivity analysis conditions and obtain sensitivity of the sensitivity determining element to the vibration characteristics of the vibration noise reduction target portion.

8. A method for manufacturing an automotive body for manufacturing an automotive body in which an automotive part constituting the automotive body is changed to a structure for enhancing stiffness and vibration-damping properties of a vibration noise reduction target portion in the automotive body are improved, the method comprising:
determining, by using the automotive body design method according to claim 1 or 2, a structure for enhancing stiffness of the automotive part based on sensitivity to vibration characteristics used for evaluation of the vibration-damping properties of the vibration noise reduction target portion; and
manufacturing the automotive part based on the determined structure for enhancing stiffness.
